Europäisches Patentamt

European Patent Office

Office européen des brevets

(11) Veröffentlichungsnummer: **0 125 456**
**B1**

(12) # EUROPÄISCHE PATENTSCHRIFT

(45) Veröffentlichungstag der Patentschrift:
08.04.87

(51) Int. Cl.⁴: **B 01 D 25/12**

(21) Anmeldenummer: **84103706.2**

(22) Anmeldetag: **04.04.84**

(54) **Membranplatte für Kammerfilterpressen.**

(30) Priorität: **11.05.83 DE 3317235**

(43) Veröffentlichungstag der Anmeldung:
**21.11.84 Patentblatt 84/47**

(45) Bekanntmachung des Hinweises auf die Patenterteilung:
**08.04.87 Patentblatt 87/15**

(84) Benannte Vertragsstaaten:
**AT BE CH DE FR GB IT LI NL SE**

(56) Entgegenhaltungen:
**EP-A-0 070 473**
**DE-A-1 961 417**
**DE-A-2 933 034**
**GB-A-2 008 428**
**GB-A-2 069 360**

(73) Patentinhaber: **Rittershaus & Blecher GmbH,
Wittensteinstrasse 80- 100, D-5600 Wuppertal 2
(DE)**

(72) Erfinder: **Oelbermann, Max, Moltkestrasse 19,
D-5630 Remscheid (DE)**
Erfinder: **Rademacher, Karl August, Hatzfelder
Strasse 33, D-5600 Wuppertal 2 (DE)**

(74) Vertreter: **Peerbooms, Rudolf, Dipl.- Phys.,
Postfach 200 208 Dickmannstrasse 45C, D-5600
Wuppertal 2 (DE)**

## Beschreibung

Die Erfindung betrifft eine Membranplatte für Kammerfilterpressen die beidseits mit Filtertuch überspannbar ist und eine auswechselbar zwischen einer Stützplatte und einem Rahmen flächig eingefaßte Membran aufweist.

Bei derartigen in der DE-OS 31 28 970, DE-OS 29 33 096, US-PS 39 68 039 und JP-AS 55-47 927, beschriebenen Membranplatten ist dafür Sorge zu tragen, daß die Membraneinspannung auch nach langen Standzeiten noch dicht bleibt. Bei diesen bekannten Membranplatten ist der Rahmen unter strammer Einspannung der Membran an der Stützplatte starr befestigt. Im allgemeinen werden dabei die Stützplatte und der Rahmen durch Schrauben lagefest zusammengebaut. Durch die DE-OS 29 33 096 ist die Verwendung von stöpselartigen Kunststoffsteckgliedern bekannt die mit einem hinteren Kopf den Rahmen halten und mit ihrem vorderen doppelkegeligen Fuß in eine Sacklochbohrung der Stützplatte eingeklemmt sind. Trotzdem treten dort oft nach nur kurzem betrieblichen Einsatz Undichtigkeiten bei der Membraneinspannung oder sogar Abrisse bei der Membran auf, da die Membran in ihrem Einspannbereich in kurzer Zeit bereits eine Materialermüdung erfährt.

Durch die US-PS 27 08 07 ist ferner eine Filterpresse bekannt, die aus nebeneinander dicht zusammengespannten Rahmen aufgebaut ist, in denen jeweils eine Filterplatte eine kurze Strecke seitwärts verschiebbar gelagert ist. Zwischen jeweils übernächsten Filterplatten sind dort elastische, geschlossene Kissen vorgesehen, die durch Druckbeaufschlagung gebläht werden und dabei je zwei Filterplatten unter Auspressen des Filterkuchens zusammenschieben. Dort ist jedoch die Schiebeführung der großen Filterplatten wegen der Verkantungs- und Verklemmungsgefahr sehr kritisch, weshalb diese Bauweise keinen Eingang in die Praxis der Großfilterpressen gefunden hat.

Durch die US-PS 38 88 769 und US-PS 42 35 721 sind ferner sogenannte Plattenfilterpressen bekannt, bei denen - im Gegensatz zu Kammerfilterpressen - ausschließlich Filterplatten im Filterplattenpaket vorliegen und also nicht die Distanzrahmen vorgesehen sind, die bei Kammerfilterplatten erweiterte Kammerräume zwischen benachbarten Filterplatten schaffen. Bei diesen Plattenfilterpressen ist es bekannt, die Filterplatten an ihren Außenflächen mit Membranen und Filtertüchern zu überziehen, die beim Schließen der Plattenfilterpresse jeweils stramm zwischen den Rändern benachbarter Filterplatten eingespannt werden. Hierbei werden allerdings die Membranen mit dem hohen Schließdruck einer Filterpresse unmittelbar gegen ein Filtertuch gepreßt, wobei sich die Struktur des Filterkuchens sowie evtl. Unregelmäßigkeiten, wie sie durch Filtertuchverschmutzung Faltenbildung oder dgl.

anfallen können, in die Membran eindrücken, was zu einem vorzeitigen Verschleiß der Membran führt. Unter diesem Gesichtspunkt und wegen der größeren erreichbaren Kammer- bzw. Filterkuchenräume werden in der Praxis vielfach Kammerfilterpressen bevorzugt, bei denen die Membranen zwischen glatten Flächen eingespannt werden, die keiner Verschmutzung durch Filterkuchenrückstände oder dgl. ausgesetzt sind.

Der Erfindung liegt die Aufgabe zugrunde, die Standzeit solcher Membranplatten, speziell ihrer auswechselbaren Membran zu verlängern.

Erfindungsgemäß wird dies dadurch erreicht daß die Membran lose zwischen der Stützplatte und dem Rahmen eingefaßt ist und erst durch den Schließdruck der Filterpresse dicht zwischen Stützplatte und Rahmen eingespannt ist und daß in der Stützplatte mehrere vorstehende Gleitlagerstücke verankert sind, auf denen der Rahmen nach Offnen der Kammerfilterpresse innerhalb eines Bewegungsspielraumes bis Auftreffen auf einen Anschlagkopf frei verschiebbar gelagert ist. Bei der Erfindung ist von der Erkenntnis ausgegangen, daß die Membran nur beim Filtern, Waschen und Auspressen des Filterkuchens Abdichtfunktionen ausüben muß nicht aber während Stillstandzeiten oder während des Filterkuchenauswurfs oder des Waschens der Filtertücher. Beim Schließen der Filterpresse, wenn die Filterplatten an ihren Randbereichen zusammengepreßt werden werden der Erfindung zufolge jetzt auch innerhalb jeder Membranfilterplatte die Stützplatte, die Membran und der Rahmen stramm zusammengespannt, wobei der Filterpressenschließdruck einen Abdichtdruck für die Membran in der Großenordnung von z.B. 700 $N/cm^2$ liefert. Unter diesem hohen Druck kann das elastische Membranmaterial bei dem es sich beispielsweise um Gummi oder Äthylen-Propylen-Dienmonomer (EPDM) handelt, aus dem Einspannbereich nur seitlich nach innen oder außen herauskriechen.

Bei der Filtration wird die Flächenpressung jedoch mit steigendem Filter-Innendruck auf einen Abdichtdruck von z. B. 500 $N/cm^2$ reduziert. Diese teilweise Entspannung erlaubt es dem Membranmaterial bereits zum Teil wieder zurückzufließen. Bei einem nachfolgenden Auspressen des Filterkuchens wird durch die Membranbeaufschlagung die Flächenpressung bis zu einem Abdichtdruck von z. B. 100 $N/cm^2$ reduziert, was eine stärkere Wanderung von Membranmaterial zuläßt wobei aber jetzt durch die auf den Membranrand wirkenden hohen Zugkräfte Material einwärts aus dem Einspannbereich herausgezogen wird. Nach Beenden des Filterkuchenauspressens wird der Innendruck auf Null gebracht, so daß der volle Filterpressenschließdruck wieder den Abdichtdruck liefert welcher ein Zurückfließen von einwärtsgezogenem Membranmaterial zunächst verhindert. Beim Wiederöffnen der Presse werden aber nunmehr Rahmen und Stützplatte um ihr Bewegungsspiel auseinandergezogen und infolgedessen die Membran im Einspannbereich wieder gelüftet. Daher kann jetzt das Membranmaterial zurückkriechen und kann sich die Membran weitestgehend wieder auf ihren ursprünglichen Zustand zurückstellen. Durch dieses regelmäßige Wiederfreigeben der Einspannbereichewird die Standzeit der Membranplatten beträchtlich erhöht.

Dieses positive Ergebnis, das mit verhältnismäßig wenigen, neuen Maßnahmen im Vergleich zur Membranplatte nach der bereits erwähnten DE-OS 29 33 096 erreicht worden ist, war äußerst überraschend. Bei dieser bekannten Membranplatte muß der Klemmsitz der verwendeten Kunststoffsteckglieder so stramm gewählt werden, daß beim Öffnen der Filterpresse der Rahmen nicht zusammen mit den Kunststoffsteckgliedern vollständig von der Stützplatte losgerissen wird. Der stramme Klemmsitz läßt dort aber keine freie begrenzte Beweglichkeit zwischen Stützplatte und Rahmen zu, weshalb dort keine Regeneration der Membran in ihrem Einspannbereich erfolgt. Die Gleitlagerstücke können als runde Bolzen ausgebildet sein, welche mit einem erweiterten Kopf, der den Anschlagkopf bildet, versehen sind, der als Begrenzungsanschlag in einer hinterschnittenen axialen Stufenbohrung des Rahmens liegt. Der Erfindung zufolge wird zweckmäßigerweise ein Bewegungsspiel zwischen etwa ein bis drei Millimeter vorgesehen.

Gemäß einer speziellen Ausführungsform der Erfindung können die Gleitlagerstücke in Sacklöcher der Stützplatte eingesetzte Bolzen sein, welche jeweils mittels einer den Sacklochboden durchsetzenden Schraube an der Stützplatte festgeschraubt sind. Alternativ können die Gleitlagerstücke den glatten Schaftansatz von Kopfschrauben darstellen, welche mit ihrem Schraubteil in Gewindesacklochbohrungen der Stützplatte eingeschraubt sind und deren Köpfe als Anschlagköpfe versenkt in den rahmenseitigen Stufenbohrungen liegen.

Gemäß einer bevorzugten Ausführungsform der Erfindung kann jedoch vorgesehen werden, daß der Rahmen und die Stützplatte jeweils mit axialen Durchgangslöchern versehen sind, die an ihren einander abgewandten Enden jeweils unter Bildung einer Schulter im Durchmesser erweitert sind, und daß die Gleitlagerstücke aus einem Spreizanker aus V2A-Stahl, Bronze oder vorzugsweise Kunststoff bestehen die durch den Rahmen hindurch eingesteckt sind und mit ihrem als lösbare Schnappverbindung ausgebildeten vorderen Ende die Schulter in der Stützplatte hintergreifen. Die Schäfte solcher Kunststoffspreizanker stellen ein leichtgängiges Gleitlager dar. Sie sind zudem preiswert und bieten vorliegend noch den Vorteil, daß sie verhältnismäßig leicht aus den Durchgangslöchern zu Demontagezwecken wieder herausgedrückt werden können, so daß ein Auswechseln der Membran rasch ausgeführt werden kann zumal nur drei Gleitlagerstücke zur losen Einfassung der Membran erforderlich sind.

Schließlich kann der Erfindung zufolge noch vorgesehen werden daß im Bereich axialer Durchgangskanäle elastische Stufenbuchsen sitzen, welche in einer hinterschnittenen Stufenbohrung des Rahmens oder der Stützplatte unverlierbar gehalten sind und als Dichtung von Platte zu Platte dienen.

Der Gegenstand der Erfindung wird im folgenden anhand der Zeichnung näher erläutert in der zeigen:

Fig. 1 In Draufsicht eine Membranplatte nach der Erfindung,

Fig. 2 einen Schnitt durch eine Lagerstelle des Rahmens der Membranplatte gemäß der Linie II-II in Fig. 1,

Fig. 3 in einer Schnittdarstellung analog zu Fig. 2 eine abgewandelte Ausführungsform der Lagerung des Rahmens an der Stützplatte der Membranplatte,

Fig. 4 die Ausbildung der Membranplatte im Bereich einer axialen Durchgangsbohrung gemäß der Schnittlinie IV-IV in Fig. 1 und

Fig. 5 eine weitere abgewandelte Ausführungsform der Lagerung des Rahmens an der Stützplatte.

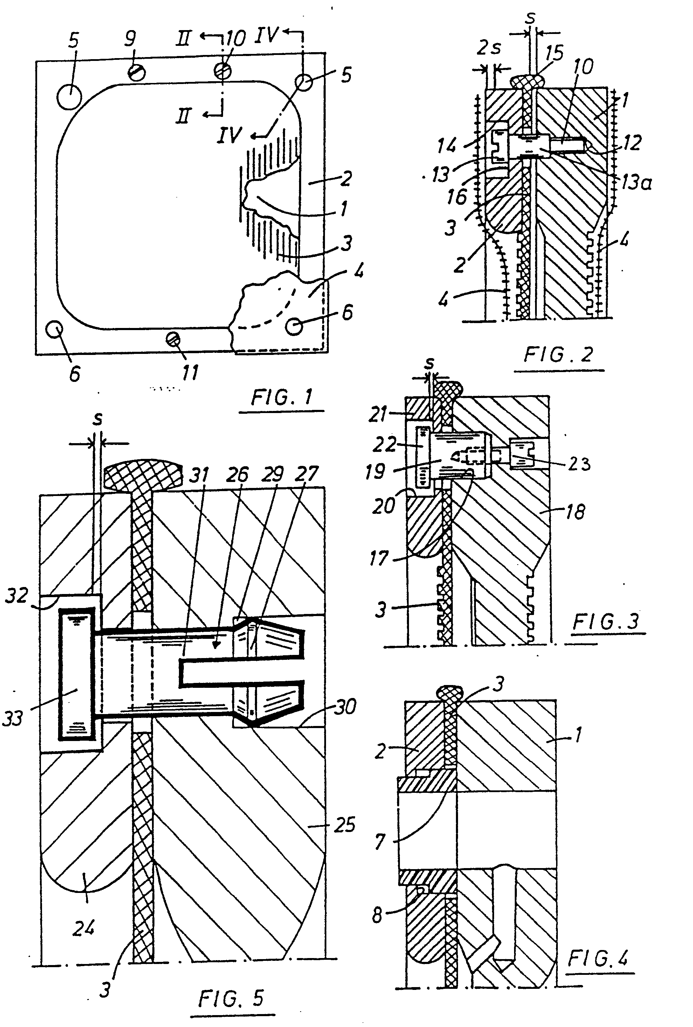

Die Membranplatte nach den Fig. 1, 2 und 4 besteht aus einer Stützplatte 1, einem Rahmen 2 und einer zwischen Stützplatte 1 und Rahmen 2 eingespannten Membran 3. An beiden Seiten wird die Membranplatte mit Filtertüchern 4 überspannt. Die Stützplatte 1 und die Membran 3 sind nur an ihren einander abgewandten Hauptflächen als Filtertuchabstützung und Entwässerungszone ausgebildet.

Stützplatte 1, Rahmen 2 und Membran 3 sind in ihrem Einspannbereich jeweils mit oberen und unteren axialen Durchgangskanälen 5, 5; 6, 6 versehen, durch welche die Trübezufuhr, Filtratableitung, Waschwasserzuleitung und Druckmediumzuleitung zum Beaufschlagen der Membran 3 in bekannter Weise geleitet werden. Die Membran 3 weist im Bereich dieser axialen Durchgangskanäle 5, 6 vergrößerte Bohrungen für elastische Stufenbuchsen 7 auf welche in einer hinterschnittenen Stufenbohrung 8 unverlierbar gehalten sind. Die Stützplatte 1 und der Rahmen 2 sind mit einem Bewegungsspiel $s$ von z. B. zwei Millimeter aneinander befestigt, wozu beim Ausführungsbeispiel nach den Fig. 1 und 2 drei Gleitlagerstücke in Form von Kopfschrauben 9, 10, 11 verwendet sind die in Gewindesacklochbohrungen 12 der Stützplatte 1 eingeschraubt sind und auf einem glatten Schaftansatz 13a den Rahmen 2 tragen. Ihre Köpfe 13 liegen bei auseinandergezogenen Rahmen 2 mindestens um den Abstand $2s$ versenkt in Stufenbohrungen 14 des Rahmens 2. In der in Fig. 2 gezeigten auseinandergezogenen Stellung hängt die Membran 3 an ihrem oberen verdickten Randwulst 15 und liegt sie im Einspannbereich völlig frei so daß sie sich nach einer vorherigen Einspannung wieder zurückstellen kann. Der Kopf 13 der Schraube wirkt hierbei mit dem Innenbund 16 der Stufenbohrung 14 als Begrenzungsanschlag zusammen, welcher das Bewegungsspiel s begrenzt, Die Membran ist zumindest oben mit einem Randwulst 15 versehen, der mehrfach breiter als das Bewegungsspiel s ist, so daß die Membran auch bei von der Stützplatte 1 weggezogenem Rahmen 2 am Randwulst 15 aufgehängt bleibt.

Beim Ausführungsbeispiel nach Fig. 3 ist das Gleitlagerstück 19 ein in ein Sackloch 17 der Stützplatte 18 eingesteckter Bolzen, der mit seinem vorderen, vorstehenden Ende in eine Stufenbohrung 20 des Rahmens 21 hineinragt wobei der Rahmen 21 auf dem Bolzenschaft verschiebbar aufliegt. Der Bolzen ist mittels einer den Boden der Sacklochbohrung 17 durchsetzenden Schraube 23 stramm an der Stützplatte 18 befestigt. Zwischen dem verdickten Lagerkopf 22 und dem Innenbund der Stufenbohrung 20 ist wiederum ein Bewegungsspiel s von etwa zwei Millimetern vorgesehen.

Bei dem bevorzugten Ausführungsbeispiel nach Fig. 5 sind der Rahmen 24 und die Stützplatte 25 über Gleitlagerstücke in Form von Kunststoffspreizankern 26 aneinander befestigt. Jeder Kunststoffspreizanker 26 ist an seinem vorderen, doppeltkegeligen Ende als Schnappverbindung 27 ausgebildet, welche hinter die Ringschulter 29 der Stufenbohrung 30 in der Stützplatte 25 einrastet. Der Schaft 31 des Ankers sitzt radial spielfrei innerhalb des engeren Teiles der Stufenbohrung 30 und ragt, allerdings mit radialem Spiel, durch den engen Teil einer Stufenbohrung 32 in dem Rahmen 24 hindurch. Auf seinem Schaft 31 ist wiederum der Rahmen 24 mit einem Spiel s beweglich gelagert und trifft beim Auseinanderziehen eines Filterplattenpaketes auf einen zylindrischen Anschlagkopf 33 am hinteren Ende des Schaftes 31 auf.

Es genügen jeweils nur drei solcher Gleitlager-Verbindungsstellen zwischen Stützplatte und Rahmen, von denen zwei 9, 10 am oberen Rand rechts und links der Vertikalmitte und einer 11 am unteren Rand mittig angeordnet werden, wie in Fig. 1 gezeigt ist.

**Patentansprüche**

1. Membranplatte für Kammerfilterpressen, die beidseits mit Filtertuch (4) überspannbar ist und eine auswechselbar zwischen einer Stützplatte (1, 18, 25) und einem Rahmen (2, 21, 24) flächig eingefaßte Membran (3) aufweist, dadurch gekennzeichnet, daß die Membran (3) lose zwischen der Stützplatte (1, 18, 25) und dem Rahmen (2, 21, 24) eingefaßt ist und erst durch den Schließdruck der Filterpresse dicht zwischen Stützplatte (1, 18, 25) und Rahmen (2, 21, 24) eingespannt ist, und daß in der Stützplatte (1, 18, 25) mehrere vorstehende Gleitlagerstücke (13a, 19, 31) verankert sind, auf denen der Rahmen (2, 21, 24) nach Öffnen der Kammerfilterpresse innerhalb eines Bewegungsspielraumes (s) bis Auftreffen auf einen Anschlagkopf (13, 22, 33) frei verschiebbar gelagert ist.

2. Membranplatte nach Anspruch 1, dadurch gekennzeichnet, daß die Membran (3) zumindest oben mit einem Randwulst (15) versehen ist, der mehrfach breiter als der Bewegungsspielraum (s) zwischen Stützplatte (1, 18, 25) und Rahmen (2, 21, 24) ist.

3. Membranplatte nach den Ansprüchen 1 oder 2 dadurch gekennzeichnet, daß die Gleitlagerstücke (13a, 19, 31) als runde Bolzen ausgebildet sind, welche mit einem erweiterten Kopf, der den Anschlagkopf (13, 22, 33) bildet, versehen sind, der jeweils in einer hinterschnittenen axialen Stufenbohrung (14, 20, 32) des Rahmens (2, 21, 24) liegt.

4. Membranplatte nach einem der Ansprüche 1, 2 oder 3, dadurch gekennzeichnet, daß das Bewegungsspiel (s) etwa ein bis drei Millimeter beträgt.

5. Membranplatte nach Anspruch 4 dadurch gekennzeichnet, daß die Gleitlagerstücke (19) in Sacklöcher (17) der Stützplatte (18) eingesetzte Bolzen sind, welche jeweils mittels einer den Sacklochboden durchsetzenden Schraube (23) an der Stützplatte (18) festgeschraubt sind (Figur 3).

6. Membranplatte nach Anspruch 4, dadurch gekennzeichnet daß die Gleitlagerstücke (13a) den glatten Schaftansatz von Kopfschrauben darstellen, welche mit ihrem Schraubteil (10) in Gewindesacklochbohrungen (12) der Stützplatte (1) eingeschraubt sind und deren Köpfe als Anschlagköpfe (13) versenkt in den rahmenseitigen Stufenbohrungen (14) liegen (Figur 2).

7. Membranplatte nach Anspruch 4 dadurch gekennzeichnet, daß der Rahmen (24) und die Stützplatte (25) jeweils mit axialen, abgestuften Durchgangsbohrungen (32, 30) versehen sind die an ihren aneinander abgewandten Enden jeweils unter Bildung einer Schulter im Durchmesser erweitert sind, und daß die Gleitlagerstücke (31) aus Spreizankern (26) bestehen welche durch den Rahmen (24) hindurch eingesteckt sind und mit ihrem als lösbare Schnappverbindung (27) ausgebildeten vorderen Ende die Schulter (29) in der Stützplatte (25) hintergreifen (Figur 5).

8. Membranplatte nach Anspruch 7, dadurch gekennzeichnet, daß die Spreizanker aus Kunststoff, V2A-Stahl oder Bronze bestehen.

9. Membranplatte nach dem einen oder mehreren der Ansprüche 1 bis 8, dadurch gekennzeichnet, daß die Stützplatte (1) und der Rahmen (2) durch drei Gleitlagerstücke aneinander befestigt sind.

10. Membranplatte nach einem oder mehreren der Ansprüche 1 bis 9, dadurch gekennzeichnet, daß im Bereich axialer Durchgangskanäle (5, 6) elastische, abdichtende Stufenbuchsen (7) sitzen, welche in einer hinterschnittenen Stufenbohrung (8) des Rahmens (2) oder der Stützplatte unverlierbar gehalten sind (Figur 4).

## Claims

1. Membrane plate for chamber filter presses which may be covered tightly on both sides with filter cloth (4) and which has an exchangeable membrane (3) framed Planely between a supporting plate (1, 18, 25) and a frame (2, 21, 24), characterized In that the membrane (3) is framed loosely between the supporting plate (1, 18, 25) and the frame (2, 21, 24) and which is clamped in tightly only by the closing pressure of the filter press between the supporting plate (1, 18, 25) and the frame (2, 21, 24), and in that in the supporting Plate (1, 18, 25) several projecting pieces of sliding bearings (13a, 19, 31) are anchored on which the frame (2, 21, 24) is mounted freely shiftably within a movement clearance (s) until striking a stop head (13, 22, 33) after opening of the chamber filter press.

2. Membrane plate as in claim 1, characterized in that the membrane (3) is provided at least on top with a marginal bead (15) which is several times as wide than the clearance for movement (s) between the supporting plate (1, 18, 25) and the frame (2, 21, 24).

3. Membrane plate as in one of the claims 1 or 2, characterized in that the pieces (13a, 19, 31) of sliding bearings are developed as round bolts which are provided with an enlarged head which constitutes the stop head (13, 22, 33) which always lies in an undercut axial stepped bore (14, 20, 32) of the frame (2, 21, 24).

4. Membrane plate as in one of the claims 1, 2 or 3, characterized in that the movement clearance (s) amounts to about one to three millimeter.

5. Membrane plate as in claim 4, characterized in that the sliding bearing pieces (19) are bolts inserted into blind holes (17) of the supporting plate (18) which bolts are screwed firmly (fig. 3) to the supporting plate (18) by means of a screw (23) passing through the bottom of the blind hole.

6. Membrane plate as in claim 4, characterized in that the slidimg bearing pieces (13a) represent the smooth shaft arrangement of head screws which are screwed with their screw part (10) into threaded blind hole bores (12) of the supporting plate (1) and the heads of which lie sunk as stop heads (13) in the stepped bores (14) at the side of the frame (fig. 2).

7. Membrane plate as in claim 4, characterized in that the frame (24) and the supporting plate (25) are always provided with axial stepped penetrating bores (32, 30) which at their ends facing away from one another are widened in the diameter while forming a shoulder, and in that the sliding bearing pieces (31) consist of spreading anchors (28) which are plugged in right through the frame (24) and which with their front end developed as a detachable snap connection (27) reach behind the shoulder (29) in the supporting plate (25) (fig. 5).

8. Membrane plate as in claim 7, characterized in that the spreading anchors consist of plastic, V2A-steel or bronze.

9. Membrane plate as in one or several of the claims 1 to 8, characterized in that the supporting plate (1) and the frame (2) are attached to one another by three pieces of sliding bearings.

10. Membrane plate as in one or several of the claims 1 to 9, characterized in that in the area of axial channels of passage (5, 6) elastic, sealing stepped bushings (7) are seated which are held captively in an undercut stepped bore (8) of the frame (2) or the supporting plate (fig. 4).

## Revendications

1. Plaque à membrane, pour filtres-presse à chambre, qui est revêtue de chaque côté par une toile filtrante (4) et comporte une membrane (3) montée à plat, de façon amovible, entre une plaque-support (1, 18, 25) et un cadre (2, 21, 24), caractérisée par le fait que la membrane (3) est montée avec jeu entre la plaque-support (1, 18, 25) et le cadre (2, 21, 24) et n'est serrée, de façon étanche, entre plaque-support (1, 18, 25) et cadre (2, 21, 24) que par la pression de fermeture du filtre-presse, et que, dans la plaque-support (1, 18, 25) sont ancrés plusieurs éléments de palier de glissement (13a, 19, 31) saillants sur lesquels le cadre (2, 21, 24) est monté coulissant librement, après l'ouverture du filtre-presse, avec un jeu de déplacement (s) jusqu'à la rencontre d'une tête de butée (13, 22, 33).

2. Plaque à membrane selon la revendication 1, caractérisée par le fait que la membrane (3) est munie, au moins en haut, d'un renflement d'extrémité (15), qui est plusieurs fois plus large que le jeu de déplacement (s) entre plaque-support (1, 18, 25) et cadre (2, 21, 24).

3. Plaque à membrane selon les revendications 1 ou 2, caractérisée par le fait que les éléments de palier de glissement (13a, 19, 31) sont en forme de boulons ronds, qui sont munis d'une tête élargie, formant la tête de butée (13, 22, 33), qui est logée dans un creux étagé (14, 20, 32) axial ménagé dans le cadre (2, 21, 24).

4. Plaque à membrane selon l'une des revendications 1, 2 ou 3, caractérisée par le fait que le jeu de déplacement (s) est d'environ un à trois millimètres.

5. Plaque à membrane selon la revendication 4, caractérisée par le fait que les éléments de palier de glissement (19) sont des boulons insérés dans des trous borgnes (17) de la plaque-support (18) et qui sont fixés sur la plaque-support (18) chacun par une vie (23) traversant le fond du trou borgne (Figure 3).

6. Plaque à membrane selon la revendication 4, caractérisée par le fait que les éléments de palier de glissement (13a) représentent le corps de vis à tête qui sont vissés, par leur partie filetée (10) dans des trous borgnes taraudés (12) de la
plaque-support (1) et dont les têtes sont logées,
noyées, pour servir de têtes de butée (13), dans
les creux étagés (14) du côté cadre (fig. 2).

7. Plaque à membrane selon la revendication 4,
caractérisée par le fait que le cadre (24) et la
plaque-support (25) sont munis, chacun, de trous
de passage axiaux, étagés (32, 30) qui
s'élargissent, chacun, en diamètre, en formant un
épaulement, à leurs extrémités qui se font face et
les éléments de palier de glissement (31) sont
constitués par des tirants à écartement (26) qui
sont insérés à travers le cadre (24) et s'engagent,
par leur extrémité avant, agencée en
accouplement à déclic, contre l'épaulement (29)
dans la plaque-support (25) (figure 5).

8. Plaque à membrane selon la revendication 7,
caractérisée par le fait que le tirant à expansion
est en matière plastique, acier V2A ou bronze.

9. Plaque à membrane selon l'une ou plusieurs
des revendications 1 à 8, caractérisée par le fait
que la plaque -support (1) et le cadre (2) sont
fixés l'un à l'autre par trois éléments de palier de
glissement.

10. Plaque à membrane selon l'une ou plusieurs
des revendications 1 à 9, caractérisée par le fait
que dans la zone de canaux de passage axiaux (5,
6) sont placés des douilles étagées (7) élastiques,
assurant l'étanchéité, et qui sont maintenues,
imperdables, dans un creux étagé (8) ménagé
dans le cadre (2) ou la plaque-support (figure 4).

FIG. 1

FIG. 2

FIG. 3

FIG. 4

FIG. 5